# EUROPÄISCHE PATENTSCHRIFT

(11) **EP 1 134 453 B1**
(45) Veröffentlichungstag und Bekanntmachung des Hinweises auf die Patenterteilung: **07.10.2009**
(21) Anmeldenummer: 01105762.7
(22) Anmeldetag: 08.03.2001
(51) Int. Cl.: F16H 19/00, B60J 7/057, E05F 15/14

(54) **Antrieb für ein verstellbares Fahrzeugteil**
Drive for an adjustable vehicle part
Actionneur pour partie réglable d'un véhicule

(30) Priorität: 16.03.2000 DE 10012723
(43) Veröffentlichungstag der Anmeldung: 19.09.2001
(73) Patentinhaber: Webasto AG, 82131 Stockdorf (DE)
(72) Erfinder: Schütt, Thomas, 82256 Fürstenfeldbruck (DE)
(74) Vertreter: Wiese, Gerhard

(56) Entgegenhaltungen:
- US-A- 4 186 524
- US-A- 4 920 698

## Beschreibung

Die vorliegende Erfindung betrifft einen Antrieb für ein verstellbares Fahrzeugteil, insbesondere ein Abdeckelement eines öffnungsfähigen Fahrzeugdaches, der mindestens ein Antriebskabel und ein angetriebenes Abtriebsritzel umfaßt.

Solche Antriebe werden in weitem Umfang beispielsweise für Deckel von Schiebedächern und ähnliches verwendet, wobei in der Regel das Abtriebsritzel über ein Untersetzungsgetriebe von einem Elektromotor angetrieben wird und als Zahnrad ausgebildet ist, welches zwischen zwei parallelen als Steigungskabel ausgebildeten Antriebskabeln angeordnet ist und diese durch direkten Eingriff an jeweils einer Stelle in entgegengesetzte Richtungen antreibt, siehe z.B. DE 43 13 687 A1.

Ferner sind, z.B. aus DE 197 34 815 C1, Tandemantriebe für verstellbare Fahrzeugdachelemente bekannt, bei welchen zwei separate Abtriebsritzel vorgesehen sind, die jeweils von einem eigenen Elektromotor über ein eigenes Untersetzungsgetriebe angetrieben werden und in direktem Eingriff mit zwei Antriebskabeln zwischen diesen angeordnet sind, um diese in entgegengesetzten Richtungen durch Eingriff an jeweils einer Stelle anzutreiben. Zwar erfolgt bei dieser Anordnung die Krafteinleitung in jedes der beiden Antriebskabel an zwei hintereinander liegenden Stellen, jedoch sind zu diesem Zweck zwei separate Antriebe vorgesehen, was einen hohen Aufwand darstellt.

Diese bekannten Antriebe sind insofern nachteilig, als bei Beaufschlagung des Abtriebsritzels mit hohem Drehmoment die Krafteinleitungsstelle in das jeweilige Antriebskabel stark belastet wird, was zu einem kabelseitigen oder ritzelseitigen Bruch führen kann.

Es ist Aufgabe der vorliegenden Erfindung, einen Antrieb für ein verstellbares Fahrzeugteil zu schaffen, welcher eine im Vergleich zum Stand der Technik höhere Krafteinleitung von dem Abtriebsritzel in das bzw. die Antriebskabel ermöglicht.

Diese Aufgabe wird erfindungsgemäß durch einen Antrieb gelöst, wie er in Anspruch 1 definiert ist. Bei dieser Lösung ist vorteilhaft, daß die Einleitung der von dem Abtriebsritzel zur Verfügung gestellten Antriebskraft in das bzw. die Antriebskabel an mindestens zwei Stellen erfolgt, so daß die einzelne Krafteinleitungsstelle im Vergleich zu bekannten Antrieben, bei welchen die Krafteinleitung in die Antriebskabel an jeweils nur einer Stelle erfolgt, stark reduziert, d.h. in der Regel mindestens halbiert wird.

Die Antriebseinheit umfasst mindestens zwei Räder, die jeweils mit dem Antriebskabel bzw. den Antriebskabeln in Eingriff stehen, und ist als Untersetzung für die Rotation des Abtriebsritzels ausgebildet, wobei die Räder zweckmäßigerweise als Zahnräder ausgebildet sind und das bzw. die Antriebskabel als Steigungskabel ausgebildet sind.

Bei einer ersten Ausführungsform umfaßt die Antriebseinheit insgesamt zwei Räder, die direkt mit dem Abtriebsritzel in Eingriff stehen, wobei das Abtriebsritzel in die Zähne der Räder eingreift und das Abtriebsritzel und die Räder im wesentlichen in einer Ebene liegen. Der Durchmesser bzw. die Zahnanzahl der beiden Räder kann dabei leicht unterschiedlich sei, wobei der Durchmesser bzw. die Zahnanzahl des Abtriebsritzels zwecks Realisierung einer Untersetzung vorzugsweise kleiner als bei den Rädern ist. Bei dieser Ausführungsform ist die einfache Ausgestaltung vorteilhaft.

Bei einer alternativen Ausführungsform ist die Antriebseinheit so ausgebildet, daß die mit den Kabeln in Eingriff stehenden Räder über ein Getriebe von dem Abtriebsritzel angetrieben werden, wobei dies vorzugsweise so realisiert ist, daß die Antriebseinheit zwei mit den Kabeln in Eingriff stehende Räder und zwei dazu koaxial angeordnete und drehfest damit verbundene Räder aufweist, die jeweils direkt mit dem Abtriebsritzel in Eingriff stehen. Bei dieser Ausführungsform ist vorteilhaft, daß durch entsprechende Ausgestaltung der einzelnen Räder eine noch stärkere Untersetzung möglich ist als bei der ersten Ausführungsform.

Im folgenden sind zwei Ausführungsformen der Erfindung anhand der beiliegenden Zeichnungen beispielhaft näher erläutert, wobei:
- Fig. 1: eine schematische perspektivische Darstellung einer ersten Ausführungsform eines erfindungsgemäßen Antriebs darstellt;
- Fig. 2: einen Schnitt entlang der Linie II-II von Fig. 1 darstellt;
- Fig. 3: einen Schnitt entlang der Linie III-III von Fig. 1 darstellt;
- Fig. 4: einen Schnitt entlang der Linie IV-IV von Fig. 1 darstellt;
- Fig. 5: eine Aufsicht auf den Antrieb von Fig. 1 darstellt, wobei zusätzlich der Motor und das Getriebe für das Abtriebsritzel dargestellt sind;
- Fig. 6: eine Ansicht ähnlich zu Fig. 1 darstellt, wobei jedoch eine zweite Ausführungsform der Erfindung gezeigt ist;
- Fig. 7: einen Schnitt entlang der Linie VII-VII von Fig. 6 zeigt; und
- Fig. 8: eine Seitenansicht des Antriebs von Fig. 6 zeigt, wobei jedoch zusätzlich der Motor und das Untersetzungsgetriebe für das Abtriebsritzel dargestellt sind.

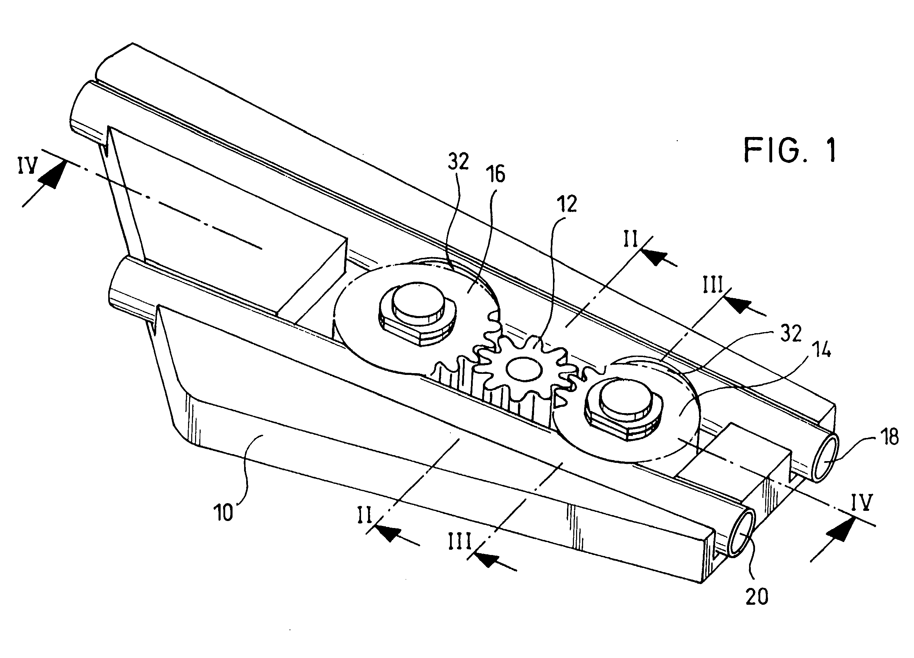

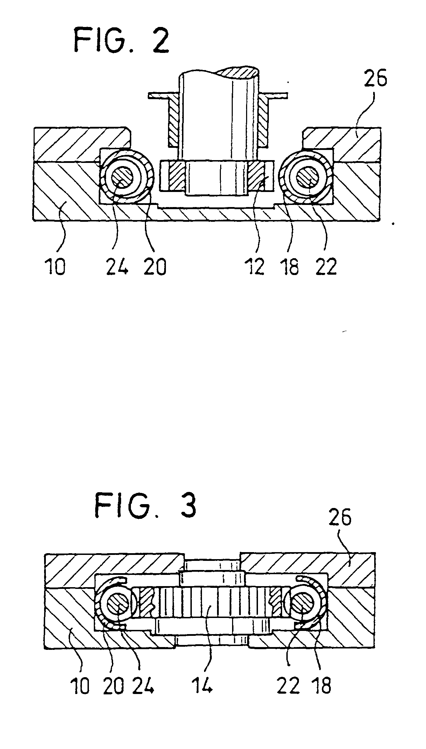

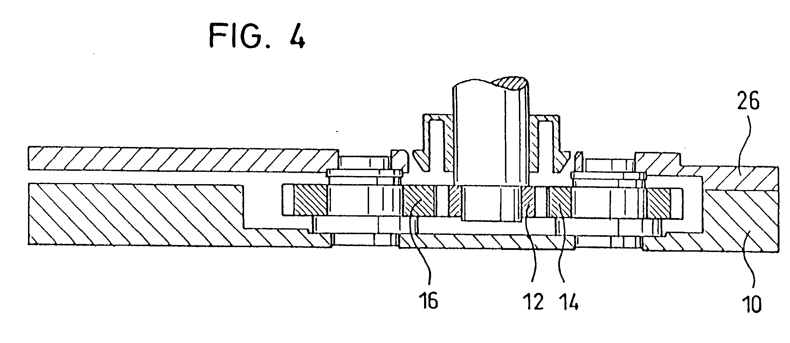

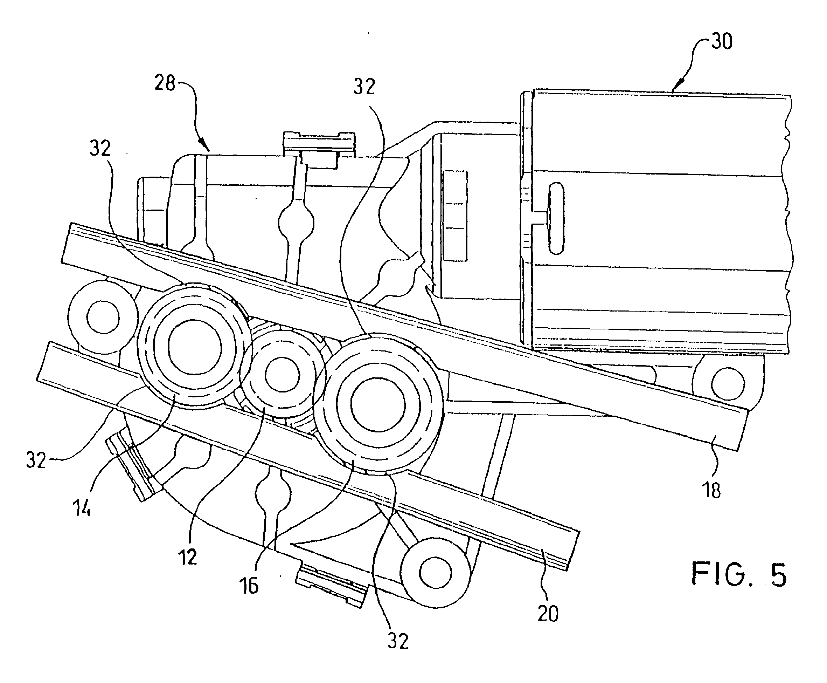

Die Figuren 1 bis 5 zeigen schematisch eine erste Ausführungsform eines Antriebs für ein verstellbares Fahrzeugteil, vorzugsweise einen Deckel oder ein anderes Abdeckelement eines öffnungsfähigen Fahrzeugdaches, z.B. den Deckel eines Schiebedaches oder Schiebehebedaches oder eine Lamelle eines Lamellendaches. In einem dachfesten Rahmen 10 sind dabei ein Abtriebsritzel 12, zwei Zahnräder 14 bzw. 16 sowie zwei Führungsrohre 18 bzw. 20 vorgesehen, welche zwei Wendelkabel bzw. Steigungskabel 22 bzw. 24 führen, deren eines Ende jeweils in bekannter Weise an dem verstellbaren Deckel etc. befestigt ist. Das Dachrahmenteil 10 ist ferner mit einem Lagerdeckel 26 versehen, der in Fig. 1 weggelassen ist. Gemäß Fig. 5 wird das Abtriebsritzel 12 in bekannter Weise von einem Schneckenrad eines Schneckengetriebes 28 angetrieben, wobei das Schneckenrad mit einer an dem vorderen Ende der Welle eines elektrischen Antriebsmotors 30 vorgesehenen Schneckenwelle kämmt, so daß die Rotation des Abtriebsritzels 12 bezüglich der Rotation der Motorwelle stark untersetzt ist.

Die Drehachsen bzw. Lagerachsen der Zahnräder 14 und 16 und des Ritzels 12 sind auf einer Linie angeordnet, wobei die Zahnräder 14 und 16 und das Abtriebsritzel 12 zwischen den beiden Führungsrohren 18 und 20 und damit den Antriebskabeln 22 bzw. 24 angeordnet sind. Die Führungsrohre 18 und 20 sind mit Ausnehmungen 32 versehen, über welche die Zahnräder 14 und 16 jeweils in Eingriff mit den Führungskabeln 22 bzw. 24 stehen, wobei jedes einzelne der Zahnräder 14 und 16 jeweils an genau einer Stelle mit jedem der Kabel 22 bzw. 24 in Eingriff steht. Das Abtriebsritzel 12 ist in der gleichen Verzahnungsebene wie die Zahnräder 14 und 16 angeordnet und steht mit beiden Zahnrädern 14 und 16 in Verzahnungseingriff, so dass eine Drehung des Abtriebsritzels 12 in eine Richtung eine entgegengesetzte, gleichlaufende Drehung der Zahnräder 14 und 16 bewirkt, welche wiederum von dem Abtriebsritzel 12 übertragenes Drehmoment als Antriebskraft in die Antriebskabel 22 bzw. 24 einleiten, die dadurch in entgegengesetzter Richtung angetrieben werden, wobei die Krafteinleitung in jedes der beiden Antriebskabel an zwei Stellen, nämlich dem Eingriffspunkt des Zahnrads 14 und dem Eingriffspunkt des Zahnrads 16, erfolgt. Insgesamt wird dadurch bei vorgegebenem Drehmoment des Abtriebsritzels 12 die Beanspruchung an jeder einzelnen Krafteinleitungsstelle in die Antriebskabel 22 bzw. 24 im Vergleich zum Stand der Technik, bei welchem das Drehmoment des Abtriebsritzels direkt auf die Antriebskabel wirkt, im Wesentlichen halbiert. Bei der vorliegenden Erfindung steht das Abtriebsritzel 12 nicht in Eingriff mit den Antriebskabeln 22 bzw. 24. Der Durchmesser bzw. die Zahnzahl des Abtriebsritzels 12 ist kleiner als bei den Zahnrädern 14 und 16, so dass im Vergleich zu einer direkten Krafteinleitung von dem Abtriebsritzel in die Antriebskabel eine Untersetzung erfolgt. Die Zahnzahlen der Zahnräder 14 und 16 können leicht unterschiedlich gewählt werden, woraus sich dann eine nicht genau parallele Lage der Führungsrohre 18 und 20 bzw. der Antriebskabel 22 und 24 ergibt. Beispielsweise können folgende Zahnzahlen für das Zahnrad 14, das Ritzel 12 und das Zahnrad 16 gewählt werden: 22/16/25 und 23/15/26. Theoretisch ist auch eine gleiche Anzahl der Zähne möglich.

Der wesentliche Vorteil der Ausführungsform gemäß Fig. 1 bis 5 mit direktem Eingriff der von dem Abtriebsritzel 12 angetriebenen Zahnräder 14 und 16 in die Antriebskabel 22 und 24 besteht darin, dass die Zahl der erforderlichen Komponenten und der Bauraumbedarf in Höhenrichtung gering ist. Da jedoch die Zähne der Zahnräder 14 und 16 sowohl für den Eingriff mit den Steigungskabeln 22 und 24 als auch mit den Zähnen des Abtriebsritzels 12 geeignet sein müssen, ist die Wahl der Art der Verzahnung nicht frei. So ist beispielsweise keine Evolventenverzahnung möglich.

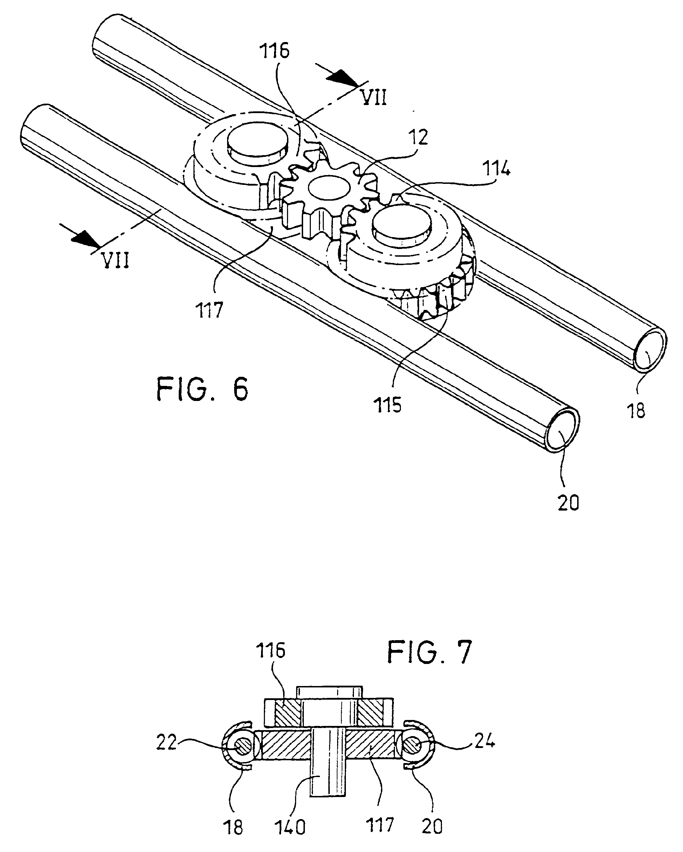

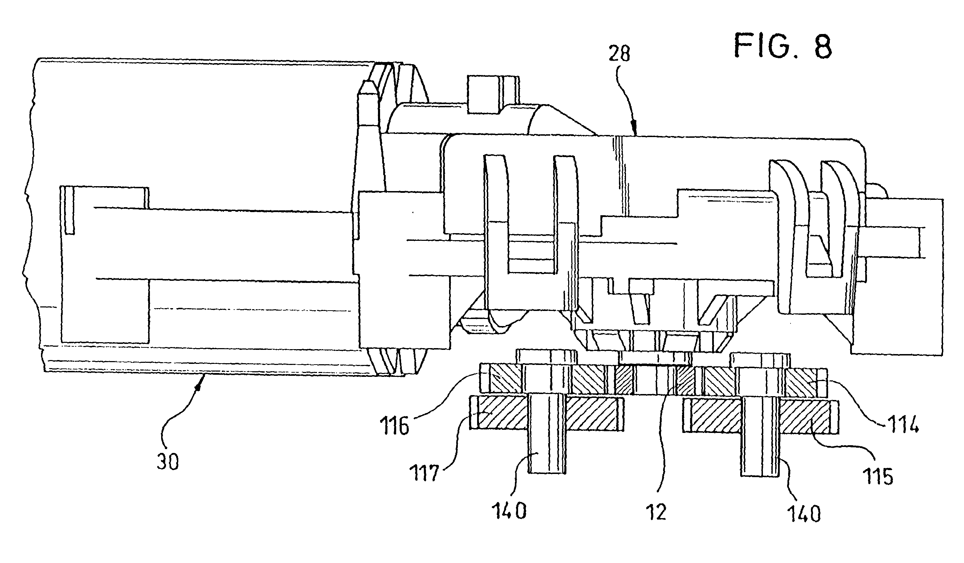

Die in Fig. 6 bis 8 dargestellte alternative Ausführungsform unterscheidet sich von der bisher beschriebenen Ausführungsform mit direktem Eingriff im wesentlichen dadurch, dass die beiden Zahnräder 115 bzw. 117, die in Eingriff mit den Antriebskabeln 22 und 24 stehen, nicht direkt, d.h. in der gleichen Verzahnungsebene, von dem Abtriebsritzel 12 angetrieben werden, sondern dass zu diesem Zweck jeweils ein zusätzliches Zahnrad (Primärrad) 114 bzw. 116 vorgesehen ist, das jeweils mit dem Abtriebsritzel 12 in direktem Eingriff steht und koaxial und drehfest bezüglich des Zahnrads (Sekundärrads) 115 bzw. 117 angeordnet ist, um dieses anzutreiben. Zu diesem Zweck ist jeweils eine gemeinsame Welle 140 vorgesehen, auf welcher die Zahnräder 114 und 115 bzw. 116 und 117 drehfest angebracht sind. Wenn der Durchmesser bzw. die Zahnzahl der mit dem Abtriebsritzel 12 in Eingriff stehenden Primärräder 114 und 116 größer als bei den entsprechenden Sekundärrädern 115 bzw. 117 gewählt wird, kann für eine zusätzliche Untersetzung der Rotation des Abtriebsritzels 12 gesorgt werden. Ein weiterer wesentlicher Vorteil dieser Ausführungsform besteht darin, daß die Verzahnung der Sekundärräder 115, 117, die mit den Antriebskabeln 22 und 24 in Eingriff stehen, und der Primärräder 114, 116, die mit dem Abtriebsritzel 12 in Eingriff stehen, unterschiedlich gewählt werden kann und somit hinsichtlich des jeweiligen Eingriffszwecks optimiert werden kann. Insbesondere ist dabei auch eine Evolventenverzahnung möglich. Ein Nachteil dieser Ausführungsform gegenüber der zuerst beschriebenen Ausführungsform besteht in dem größeren Bauraumbedarf in Höhenrichtung und in der Verwendung zusätzlicher Komponenten (zwei zusätzliche Zahnräder).

Insgesamt bietet die vorliegende Erfindung den wesentlichen Vorteil, daß für die Übertragung eines vorgegebenen Drehmoments des Abtriebsritzels auf die Antriebskabel durch das Vorsehen von mindestens zwei Krafteinleitungsstellen für jedes Kabel die Beanspruchung an den Krafteinleitungsstellen im Vergleich zum Stand der Technik, bei welchem nur eine Krafteinleitungsstelle pro Kabel vorgesehen ist, wesentlich verringert wird, was einerseits die Zuverlässigkeit des Antriebs erhöht und andererseits den Einsatz für Dachsysteme möglich macht, bei welchen sehr hohe Antriebskräfte übertragen werden müssen, wie z.B. bei Großdachsystemen für beispielsweise Cabrios.

## Patentansprüche

1. Antrieb eines verstellbaren Deckels oder Abdeckelement eines öffnungsfähigen Fahrzeugdachs, mit mindestens einem Antriebskabel (22, 24) und einem angetriebenen Abtriebsritzel (12), **dadurch gekennzeichnet, dass**, das Abtriebsritzel (12) eine Antriebseinheit des Antriebs (14, 16; 114, 115, 116, 117) antreibt, die mit dem Antriebskabel bzw. den Antriebskabeln (22, 24) jeweils an mindestens zwei Stellen in Eingriff steht, um dieses bzw. diese anzutreiben, wobei die Antriebseinheit mindestens zwei Räder (14, 16; 115, 117) umfasst, von denen jedes Rad (14, 16; 115, 117) mit dem Antriebskabel bzw. den Antriebskabeln (22, 24) in Eingriff steht.

2. Antrieb nach Anspruch 1, **dadurch gekennzeichnet, dass** die Antriebseinheit (14, 16; 114, 115, 116, 117) als Untersetzung für die Rotation des Abtriebsritzels (12) ausgebildet ist.

3. Antrieb nach Anspruch 1 oder 2, **dadurch gekennzeichnet, dass** die Räder (14, 16; 115, 117) als Zahnräder ausgebildet sind und das bzw. die Antriebskabel (22, 24) als Steigungskabel ausgebildet sind.

4. Antrieb nach Anspruch 1 bis 3, **dadurch gekennzeichnet, dass** die Antriebseinheit zwei Räder (14, 16) umfasst, die mit dem bzw. den Antriebskabel(n) (22, 24) und zugleich direkt mit dem Abtriebsritzel (12) in Eingriff stehen.

5. Antrieb nach Anspruch 5, sofern auf Anspruch 3 rückbezogen, **dadurch gekennzeichnet, dass** das Abtriebsritzel (12) in die Zähne der Räder (14, 16) eingreift, um diese anzutreiben, wobei die Räder und das Abtriebsritzel im Wesentlichen in einer Ebene liegen.

6. Antrieb nach Anspruch 5, **dadurch gekennzeichnet, dass** der Durchmesser bzw. die Zahnanzahl der beiden Räder (14, 16) leicht unterschiedlich ist.

7. Antrieb nach Anspruch 5 oder 6, **dadurch gekennzeichnet, dass** der Durchmesser bzw. die Zahnanzahl des Abtriebsritzels (12) kleiner als bei den Rädern (14, 16) ist.

8. Antrieb nach Anspruch 1 bis 3, **dadurch gekennzeichnet, dass** die Antriebseinheit (114, 115, 116, 117) so ausgebildet ist, dass die mit dem Antriebskabel bzw. den Antriebskabeln (22, 24) in Eingriff stehenden Räder (115, 117) über ein Getriebe (114, 116) von dem Abtriebsritzel (12) angetrieben werden.

9. Antrieb nach Anspruch 8, **dadurch gekennzeichnet, dass** die Antriebseinheit (114, 115, 116, 117) zwei mit dem Antriebskabel bzw. den Antriebskabeln (22, 24) in Eingriff stehende Räder (115, 117) und zwei dazu koaxial angeordnete und drehfest damit verbundene Räder (114, 116) aufweist, die direkt mit dem Abtriebsritzel (12) in Eingriff stehen.

10. Antrieb nach Anspruch 9, **dadurch gekennzeichnet, dass** der Durchmesser bzw. die Zahnanzahl der beiden mit dem Antriebskabel bzw. den Antriebskabeln (22, 24) in Eingriff stehenden Rädern (115, 117) unterschiedlich zu den mit dem Abtriebsritzel (12) in Eingriff stehenden Rädern (114, 116) gewählt ist.

11. Antrieb nach Anspruch 9 oder 10, **dadurch gekennzeichnet, dass** der Durchmesser bzw. die Zahnanzahl der beiden mit dem Antriebskabel bzw. den Antriebskabeln (22, 24) in Eingriff stehenden Rädern (115, 117) gleich ist.

12. Antrieb nach Anspruch 1 bis 11, **dadurch gekennzeichnet, dass** die Räder (14, 16; 115, 117) so angeordnet sind, dass sie jeweils mit der selben Seite des Antriebskabels bzw. der Antriebskabel (22, 24) in Eingriff stehen.

13. Antrieb nach Anspruch 12, **dadurch gekennzeichnet, dass** zwei in entgegengesetzter Richtung angetriebene Antriebskabel (22, 24) vorgesehen sind, wobei die Räder (14, 16; 115, 117) dazwischen liegend angeordnet sind.

14. Antrieb nach Anspruch 12 oder 13, **dadurch gekennzeichnet, dass** die Drehachsen der Räder (14, 16; 115, 117) und des Abtriebsritzels (12) im Wesentlichen auf einer Linie angeordnet sind.

## Claims

1. Drive of an adjustable cover or covering element of a vehicle roof which can be opened, having at least one drive cable (22, 24) and a driven output pinion (12) **characterized in that** the output pinion (12) drives a drive unit of the drive (14, 16; 114, 115, 116, 117), which drive unit is in engagement in each case at at least two locations with the drive cable or the drive cables (22, 24), in order to drive it or them, the drive unit comprising at least two wheels (14, 16; 115, 117), of which each wheel (14, 16; 115, 117) is in engagement with the drive cable or the drive cables (22, 24).

2. Drive according to Claim 1, **characterized in that** the drive unit (14, 16; 114, 115, 116, 117) is configured as a gear reduction for the rotation of the output pinion (12).

3. Drive according to Claim 1 or 2, **characterized in that** the wheels (14, 16; 115, 117) are configured as gearwheels and the drive cable or the drive cables (22, 24) is/are configured as a rising cable/rising cables.

4. Drive according to Claims 1 to 3, **characterized in that** the drive unit comprises two wheels (14, 16) which are in engagement with the drive cable or drive cables (22, 24) and at the same time directly with the output pinion (12).

5. Drive according to Claim 5, as long as it refers back to Claim 3, **characterized in that** the output pinion (12) engages into the teeth of the wheels (14, 16), in order to drive them, the wheels and the output pinion lying substantially in one plane.

6. Drive according to Claim 5, **characterized in that** the diameter and the number of teeth of the two wheels (14, 16) are slightly different.

7. Drive according to Claim 5 or 6, **characterized in that** the diameter and the number of teeth of the output pinion (12) are smaller than in the case of the wheels (14, 16).

8. Drive according to Claims 1 to 3, **characterized in that** the drive unit (114, 115, 116, 117) is configured in such a way that the wheels (115, 117) which are in engagement with the drive cable or the drive cables (22, 24) are driven by the output pinion (12) via a gear mechanism (114, 116).

9. Drive according to Claim 8, **characterized in that** the drive unit (114, 115, 116, 117) has two wheels (115, 117) which are in engagement with the drive cable or the drive cables (22, 24) and two wheels (114, 116) which are arranged coaxially with said wheels (115, 117), are connected fixedly in terms of rotation to said wheels (115, 117) and are in engagement directly with the output pinion (12).

10. Drive according to Claim 9, **characterized in that** the diameter and the number of teeth of the two wheels (115, 117) which are in engagement with the drive cable or the drive cables (22, 24) are selected to be different from the wheels (114, 116) which are in engagement with the output pinion (12).

11. Drive according to Claim 9 or 10, **characterized in that** the diameter and the number of teeth of the two wheels (115, 117) which are in engagement with the drive cable or the drive cables (22, 24) are identical.

12. Drive according to Claims 1 to 11, **characterized in that** the wheels (14, 16; 115, 117) are arranged in such a way that they are in engagement in each case with the same side of the drive cable or the drive cables (22, 24).

13. Drive according to Claim 12, **characterized in that** two drive cables (22, 24) are provided which are driven in opposite directions, the wheels (14, 16; 115, 117) being arranged so as to lie between them.

14. Drive according to Claim 12 or 13, **characterized in that** the rotational axes of the wheels (14, 16; 115, 117) and of the output pinion (12) are arranged substantially on one line.

## Revendications

1. Entraînement d'un recouvrement réglable ou d'un élément de recouvrement d'un toit de véhicule ouvrant, comprenant au moins un câble d'entraînement (22, 24) et un pignon de prise de force entraîné (12), **caractérisé en ce que** le pignon de prise de force (12) entraîne une unité d'entraînement de l'entraînement (14, 16 ; 114, 115, 116, 117), qui est en prise avec le câble d'entraînement ou les câbles d'entraînement (22, 24) à chaque fois en au moins deux endroits afin d'entrainer celui-ci ou ceux-ci, l'unité d'entraînement comprenant au moins deux roues (14, 16 ; 115, 117) dont chaque roue (14, 16 ; 115, 117) est en prise avec le câble d'entraînement ou les câbles d'entraînement (22, 24).

2. Entraînement selon la revendication 1, **caractérisé en ce que** l'unité d'entraînement (14, 16 ; 114, 115, 116, 117) est réalisée sous forme de démultiplication pour la rotation du pignon de prise de force (12).

3. Entraînement selon la revendication 1 ou 2, **caractérisé en ce que** les roues (14, 16 ; 115, 117) sont réalisées sous forme de roues dentées et le ou les câbles d'entraînement (22, 24) sont réalisés sous forme de câbles d'entraînement.

4. Entraînement selon les revendications 1 à 3, **caractérisé en ce que** l'unité d'entraînement comprend deux roues (14, 16) qui sont en prise avec le ou les câbles d'entraînement (22, 24) et qui sont en outre directement en prise avec le pignon de prise de force (12).

5. Entraînement selon la revendication 5, dans la mesure où elle se rapporte à la revendication 3, **caractérisé en ce que** le pignon de prise de force (12) vient en prise dans les dents des roues (14, 16), afin de les entraîner, les roues et le pignon de prise de force se situent essentiellement dans un plan.

6. Entraînement selon la revendication 5, **caractérisé en ce que** le diamètre ou le nombre de dents des deux roues (14, 16) est légèrement différent.

7. Entraînement selon la revendication 5 ou 6, **caractérisé en ce que** le diamètre ou le nombre de dents du pignon de prise de force (12) est inférieur à celui des roues (14, 16).

8. Entraînement selon les revendications 1 à 3, **caractérisé en ce que** l'unité d'entraînement (114, 115, 116, 117) est réalisée de telle sorte que les roues (115, 117) en prise avec le ou les câbles d'entraînement (22, 24) puissent être entraînées par le biais d'un engrenage (114, 116) par le pignon de prise de force (12).

9. Entraînement selon la revendication 8, **caractérisé en ce que** l'unité d'entraînement (114, 115, 116, 117) présente deux roues (115, 117) en prise avec le ou les câbles d'entraînement (22, 24) et deux roues (114, 116) disposées coaxialement à celles-ci et connectées de manière solidaire en rotation avec elles, qui sont en prise directe avec le pignon de prise de force (12).

10. Entraînement selon la revendication 9, **caractérisé en ce que** le diamètre ou le nombre de dents des deux roues (115, 117) en prise avec le ou les câbles d'entraînement (22, 24) est choisi différent de ceux des roues (114, 116) en prise avec le pignon de prise de force (12).

11. Entraînement selon la revendication 9 ou 10, **caractérisé en ce que** le diamètre ou le nombre de dents des deux roues (115, 117) en prise avec le ou les câbles d'entraînement (22, 24) est identique.

12. Entraînement selon les revendications 1 à 11, **caractérisé en ce que** les roues (14, 16 ; 115, 117) sont disposées de telle sorte qu'elles soient en prise à chaque fois avec le même côté du ou des câbles d'entraînement (22, 24).

13. Entraînement selon la revendication 12, **caractérisé en ce que** deux câbles d'entraînement (22, 24) entraînés en directions opposées sont prévus, les roues (14, 16 ; 115, 117) étant disposées entre eux.

14. Entraînement selon la revendication 12 ou 13, **caractérisé en ce que** les axes de rotation des roues (14, 16 ; 115, 117) et du pignon de prise de force (12) sont disposés essentiellement sur une même ligne.
